# EUROPÄISCHE PATENTSCHRIFT

(11) **EP 1 516 566 B1**
(45) Veröffentlichungstag und Bekanntmachung des Hinweises auf die Patenterteilung: **05.03.2008**
(21) Anmeldenummer: 04021654.1
(22) Anmeldetag: 11.09.2004
(51) Int. Cl.: A47C 17/80

(54) **Liege für LKW-Fahrerhaus**
Couch for a truck cabin
Couchette pour cabine de camion

(30) Priorität: 20.09.2003 DE 10343600
(43) Veröffentlichungstag der Anmeldung: 23.03.2005
(73) Patentinhaber: MAN Nutzfahrzeuge Aktiengesellschaft, 80995 München (DE)
(72) Erfinder: Glandien, Detlef, 85757 Karlsfeld (DE); Kneifel, Eberhard, 89250 Senden (DE); Rohrmüller, Hans, 82216 Maisach (DE)

(56) Entgegenhaltungen:
- DE-A1- 2 348 264
- DE-C- 802 832
- GB-A- 877 366
- NL-A- 8 401 599
- US-A- 4 659 137
- PATENT ABSTRACTS OF JAPAN Bd. 1998, Nr. 04, 31. März 1998 (1998-03-31) & JP 09 328949 A (HAYASHI KENKICHI), 22. Dezember 1997 (1997-12-22)

## Beschreibung

Die Erfindung betrifft ein LKW-Fahrerhaus nach dem Oberbegriff des Patentanspruches 1.

Ein derartiges LKW-Fahrerhaus ist aus NL-A-8401599 bekannt. Das bekannte LKW-Fahrerhaus weist an seiner Rückwand eine Liege auf, welche zwei gegeneinander verschwenkbare Brettteile aufweist. Die Liege ist in ihrer Längsrichtung quer zur Fahrzeuglängsachse angeordnet. Die Verschwenkbarkeit der beiden Brettteile, welche bis zu einem Winkel von 90° gegeneinander verschwenkt werden können, wird durch ein sich über die gesamte Länge der Liege erstreckendes Scharnier gewährleistet.

Die Erfindung hat die Aufgabe, ein LKW-Fahrerhaus der eingangs genannten Art zu schaffen, in welchem die Liege je nach Bedarf in eine Schlafliege, in eine Ablagefläche oder in einen Stauraum verändert werden kann.

Diese Aufgabe wird durch die Merkmale des Patentanspruches 1 gelöst.

Durch diese vielfältigen Verwendungsmöglichkeiten der erfindungsgemäßen Liege kann der Bereich der Liege flexibel, entsprechend den gewünschten Erfordernissen genutzt werden.

Um die verschiedenen Verwendungsmöglichkeiten der Liege auf einfache und kostengünstige Weise realisieren zu können, kann sie ein an einer Rückwand des Fahrerhauses angeordnetes Brett oder dergleichen aufweisen, das in seiner Längsrichtung in zwei Brettteile aufgeteilt ist, und dessen Längsrichtung quer zur Fahrzeuglängsachse angeordnet ist. Dann kann ein in Fahrtrichtung vorderer Teil des zweigeteilten Bretts, je nach Bedarf in der Weise positioniert werden, dass entweder eine Liege oder eine Ablagefläche oder ein Stauraum entsteht. Anstelle eines Brettes kann auch ein Blech, eine Kunststoffplatte oder ein anderes, hierfür geeignetes Bauelement vorgesehen sein.

Damit die Liege bei ihrer Verwendung als Ruheliege einen gewissen Komfort aufweist, kann das zweigeteilte Brett oder dergleichen eine Polsterung aufweisen. Vorteilhafterweise weist jedes Brettteil der zweigeteilten Liege eine separate Polsterung auf.

Wenn das in Fahrtrichtung betrachtet vordere Brettteil in der Weise positionierbar ist, dass die gepolsterten Flächen beider Brettteile aufeinander gelegt werden können, entsteht die Ablagefläche, auf der die unterschiedlichsten Utensilien abgelegt werden können, wie beispielsweise Dosen, Ausrüstungsgegenstände etc.. Ebenso können auf dieser Ablagefläche Gegenstände fest installiert werden.

Um zu verhindern, dass die abgelegten Utensilien, insbesondere während der Fahrt von der Ablagefläche herunterfallen, kann das obere Brettteil an seinem in Fahrtrichtung betrachtet vorderen Rand eine Herausfallsicherung aufweisen. Zweckmäßigerweise kann das obere Brettteil auch an seinen Seitenrändern mit einer Herausfallsicherung versehen sein.

In einer besonders einfachen und kostengünstigen Ausgestaltung kann die Herausfallsicherung eine über die Ablagefläche nach oben vorstehende Leiste, eine Abkantung oder ein zusätzliches, beispielsweise muldenförmig ausgestaltetes Bauteil sein. Alternativ oder zusätzlich sind jedoch auch andere Herausfallsicherungen wie beispielsweise Netze, Magnete, auf der Ablagefläche angebrachte Vertiefungen oder dergleichen denkbar. Außerdem kann die Ablagefläche eine mit einem hohen Haftungsvermögen versehene Oberfläche sein, oder zusammen mit den abzulegenden Gegenständen eine hohe Reibung erzeugen. Eine solche Oberfläche kann beispielsweise aus einem relativ adhäsiven Kunststoff oder aus einem filzähnlichen Material hergestellt werden.

Um die Liege in einen Stauraum umwandeln zu können, kann das in Fahrtrichtung betrachtet vordere Brettteil nach oben, beispielsweise in eine Vertikale oder in einen zweckmäßigen Winkel zur Vertikalen positioniert werden. Das beispielsweise vertikal stehende Brettteil bildet dann in Fahrtrichtung einen Abschluss des Stauraums und sichert dann die verstauten Gegenstände, sodass ein Herausfallen der verstauten Gegenstände, auch während der Fahrt, zuverlässig ausgeschlossen ist.

Bei der Erfindung ist an den Stirnseiten jedes Brettteils jeweils ein Schenkel angeordnet, wobei die an benachbarten Stirnseiten angeordneten Schenkel durch ein Schwenkelement miteinander verbunden sind. Durch die Anordnung des Schwenkelementes zwischen den an den benachbarten Stirnseiten angeordneten Schenkeln lässt sich der in Fahrtrichtung vorderer Teil des zweigeteilten Bretts entsprechend dem gewünschten Verwendungszweck der Liege mühelos verschwenken.

Um das in Fahrtrichtung vordere Brettteil in der gewünschten verschwenkten Position feststellen zu können, kann das Schwenkelement eine Arretiereinrichtung aufweisen. Alternativ ist es jedoch auch möglich, in einer kostengünstigeren Variante das arretierbare Schwenkelement durch ein Drehlager zu ersetzen.

Damit die Liege einen stabilen Halt hat, können die am in Fahrtrichtung betrachtet hinteren Brettteil angeordneten Schenkel mit der Fahrerhaus- oder Karosseriestruktur verbunden sein.

Damit auch LKW-Fahrerhäuser, die noch mit keiner Liege oder mit keiner erfindungsgemä-ßen Liege ausgestattet sind, mit den Vorteilen der erfindungsgemäßen Liege versehen werden können, kann die Liege nachgerüstet werden.

Das LKW-Fahrerhaus kann insbesondere ein mittellanges oder kurzes Fahrerhaus sein.

Nachfolgend wird ein Ausführungsbeispiel einer erfindungsgemäßen Liege anhand der beiliegenden Zeichnung näher erläutert.

Im Einzelnen zeigen:
- Fig. 1: eine Draufsicht auf ein LKW-Fahrerhaus mit einer Liege;
- Fig. 2: eine Seitenansicht auf ein LKW-Fahrerhaus mit einer in mehreren Gebrauchs-Stellungen dargestellten Liege;
- Fig. 3: eine perspektivische Ansicht auf eine Liege in Liegestellung;
- Fig. 4: eine perspektivische Ansicht auf eine Liege in Stauraumstellung;
- Fig. 5: eine perspektivische Ansicht auf eine Liege in Ablagestellung.

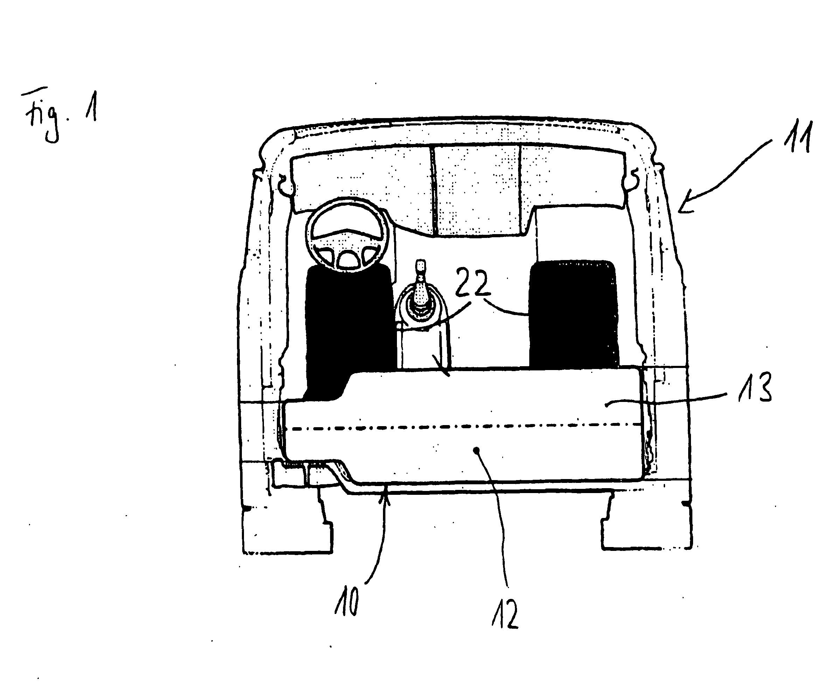

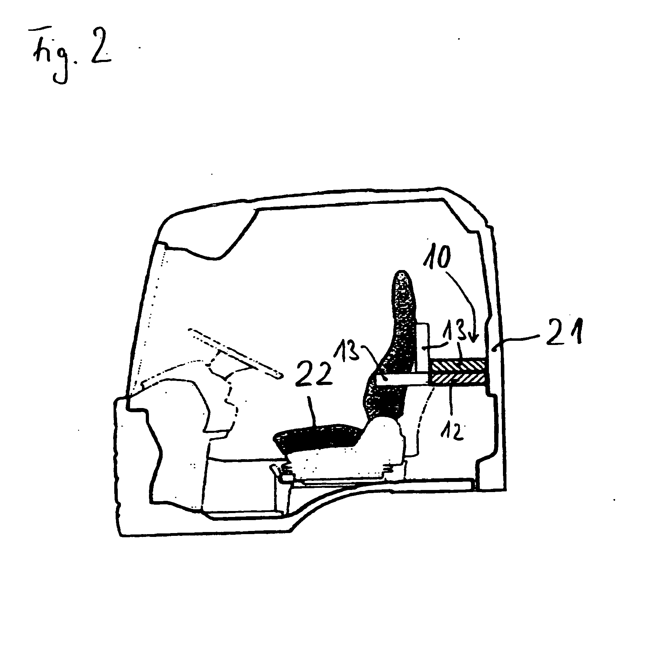

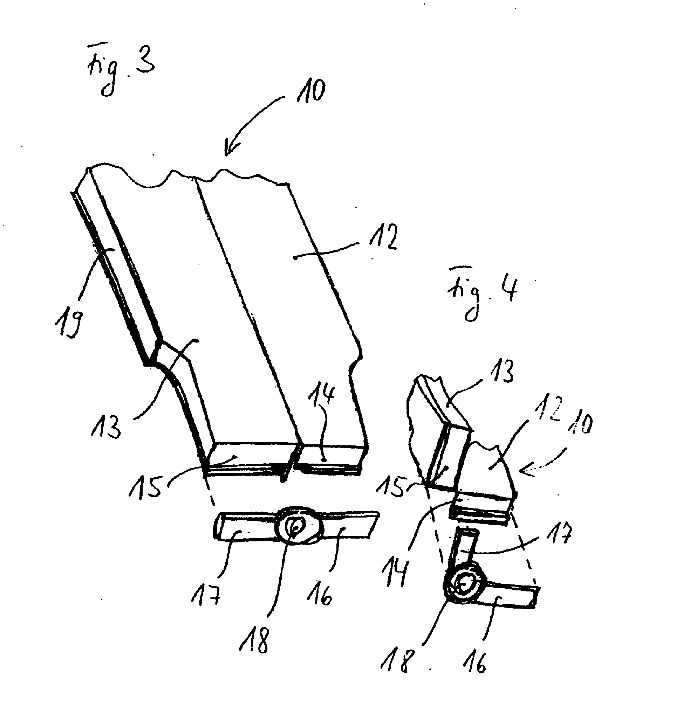

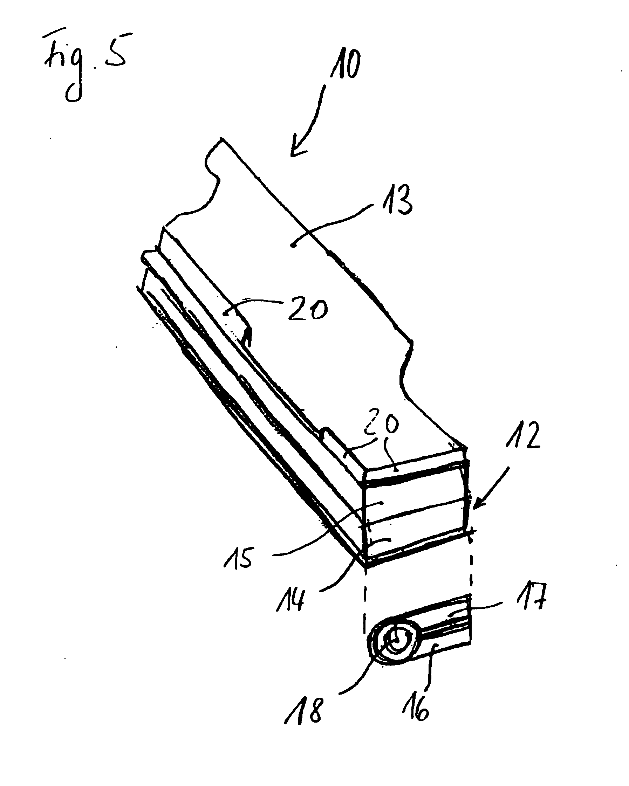

Fig. 1 zeigt eine Liege 10, die in einem LKW-Fahrerhaus 11 oberhalb zweier Sitze 22 angeordnet ist. Die Liege 10 ist in ihrer Längsrichtung zweigeteilt, und weist in diesem Ausführungsbeispiel zwei Brettteile 12 und 13 auf. Das Brettteil 13 kann gegenüber dem Brettteil 12, wie in Fig. 2 dargestellt, in verschiedene Stellungen verschwenkt werden. Wenn die beiden Brettteile 12 und 13 in der Weise positioniert sind, dass sie in ihrer Längsrichtung nebeneinander angeordnet sind und eine ebene Flächen bilden (siehe Fign. 2 und 3), kann die Liege 10 zum Ausruhen für eine Person verwendet werden. Wenn das Brettteil 13 beispielsweise in die Vertikale oder in eine annähernd vertikale Position verschwenkt (siehe Fign. 2 und 4) ist, kann die Liege 10 als ein Stauraum zum Zwecke der Verstauung größerer und kleinerer Gegenstände verwendet werden. Das vertikale Brett 13 verhindert dann, insbesondere auch während der Fahrt, ein unerwünschtes Herausfallen der verstauten Gegenstände. In einer dritten Verwendungsvariante wird das Brettteil 13 soweit verschwenkt, dass die beiden eine ebene Fläche zum Ausruhen einer Person bildenden Oberflächen der Brettteile 12 und 13 aufeinander liegen (siehe Fign. 2 und 5). Dann kann die Liege 10 als eine Ablagefläche, zum Ablegen verschiedener Utensilien verwendet werden. Somit kann die Liege 10 während der Fahrt, wenn sie nicht zum Ausruhen des LKW-Personals verwendet werden kann, sinnvoll als Ablagefläche oder Stauraum genutzt werden. Bei diesen Verwendungsarten nimmt sie weniger Platz ein, als wenn sie als Ruheliege verwendet wird. Somit gibt sie bei diesen Verwendungsarten gleichzeitig den während der Fahrt benötigten Platz im Bereich der Fahrersitze frei.

Das Brettteil 13 weist in der Ablagestellung an seiner Oberseite eine nach oben vorstehende Leiste 20 auf (siehe Fig. 5). Die Leiste 20 ist sowohl am in Fahrtrichtung betrachtet vorderen Rand als auch am seitlichen Rand des Brettteils 13 angebracht. Die Leiste 20 verhindert somit - insbesondere während der Fahrt - ein unerwünschtes Herunterfallen von auf der Ablagefläche abgestellten Utensilien. Außer einer Leiste 20 sind auch andere Herausfallsicherungen möglich, wie beispielsweise Netze, Magnete oder auf der Ablagefläche angeordnete Vertiefungen oder dergleichen. Es ist auch möglich, dass die Ablagefläche eine ein hohes Haftungsvermögen aufweisende Oberfläche ist, oder die Oberfläche zusammen mit den abzulegenden Gegenständen eine hohe Reibung erzeugt.

Die Brettteile 12 und 13 weisen an ihren Stirnseiten 14 und 15 Schenkel 16 und 17 auf. Die Schenkel 16 und 17 sind durch einen Schwenkelement 18 miteinander verbunden. Somit können die Brettteile 12 und 13 um eine Drehachse, die sich parallel zur Längsrichtung der Liege 10 erstreckt, in die in den Fign. 2 bis 5 dargestellten Stellungen verschwenkt werden. Damit die Brettteile 12 und 13 in den unterschiedlichen verschwenkten Stellungen sicher arretiert werden können, ist das Schwenkelement 18 mit einer hier nicht näher dargestellten Arretiereinrichtung versehen.

Die beiden Brettteile 12 und 13 weisen an der als Liegefläche verwendbaren Seite eine Polsterung 19 auf (siehe Fig. 3). Die Polsterung 19 dient einem angenehmen Liegekomfort, wenn sich eine Person auf der Liege 10 ausruht.

Wie in Fig. 2 erkennbar, ist die Liege 10 mit den am Brettteil 12 angeordneten Schenkeln 16 an einer Karosserie 21 befestigt, um eine stabile Anbringung der Liege 10 zu gewährleisten.

Unabhängig von der Ausführungsart der erfindungsgemäßen Liege 10 kann diese anstelle der beiden Brettteile 12,13 funktionsähnliche Blechelemente, Kunststoffplatten oder andere, hierfür geeignete Bauelemente aufweisen.

### BEZUGSZEICHENLISTE

- 10: Liege
- 11: LKW-Fahrerhaus
- 12: Brettteil
- 13: Brettteil
- 14: Stirnseite
- 15: Stirnseite
- 16: Schenkel
- 17: Schenkel
- 18: Schwenkelement
- 19: Polsterung
- 20: Leiste
- 21: Karosserie
- 22: Sitz

## Patentansprüche

1. LKW-Fahrerhaus mit einer Liege, (10), welche ein an einer Rückwand des LKW-Fahrerhauses (11) angeordnetes Brett aufweist, das in seiner Längsrichtung in zwei gegen einander verschwenkbare Brettteile (12, 13) aufgeteilt ist und dessen Längsrichtung quer zur Fahrzeuglängsachse angeordnet ist, **dadurch gekennzeichnet, dass** an den Stirnseiten (14, 15) jedes Brettteils (12, 13) jeweils ein Schenkel (16, 17) angeordnet ist, wobei die an benachbarten Stirnseiten (14, 15) angeordneten Schenkel (16, 17) durch ein Schwenkelement (18) miteinander verbunden sind.

2. LKW-Fahrerhaus nach Anspruch 1, **dadurch gekennzeichnet, dass** das Schwenkelement (18) eine Arretiereinrichtung ausweist.

3. LKW-Fahrerhaus nach Anspruch 1 oder 2, **dadurch gekennzeichnet, dass** das in Fahrtrichtung betrachtet vordere Brettteil (13) nach oben in die Vertikale verschwenkbar ist.

4. LKW-Fahrerhaus nach einem der Ansprüche 1 bis 3, **dadurch gekennzeichnet, dass** das zweigeteilte Brett eine Polsterung (19) aufweist.

5. LKW-Fahrerhaus nach Anspruch 4, **dadurch gekennzeichnet, dass** jedes Brettteil (12, 13) eine separate Polsterung (19) aufweist.

6. LKW-Fahrerhaus nach einem der Ansprüche 1 bis 5, **dadurch gekennzeichnet, dass** das in Fahrtrichtung vordere Brettteil (13) in der Weise verschwenkbar ist, dass die gepolsterten Flächen beider Brettteile (12, 13) aufeinander liegen.

7. LKW-Fahrerhaus nach Anspruch 6, **dadurch gekennzeichnet, dass** das obere Brettteil (13) an seinem in Fahrtrichtung betrachtet vorderen Rand eine Herausfallsicherung aufweist.

8. LKW-Fahrerhaus nach Anspruch 6 oder 7, **dadurch gekennzeichnet, dass** das obere Brettteil (13) an den Seitenrändern eine Herausfallsicherung aufweist.

9. LKW-Fahrerhaus nach Anspruch 7 oder 8, **dadurch gekennzeichnet dass** die Herausfallsicherung eine über die Ablageflächen nach oben vorstehende Leiste (20) ist.

10. LKW-Fahrerhaus nach einem der Anspruch 7 bis 9, **dadurch gekennzeichnet, dass** die Herausfallsicherung ein Netz ist.

11. LKW-Fahrerhaus nach einem der Ansprüche 7 bis 10, **dadurch gekennzeichnet, dass** die Herausfallsicherung mindestens einen Magneten aufweist.

12. LKW-Fahrerhaus nach einem der Ansprüche 7 bis 11, **dadurch gekennzeichnet, dass** die Herausfallsicherung mindestens eine in der Ablagefläche angebrachte Vertiefung aufweist.

13. LKW-Fahrerhaus nach einem der Ansprüche 7 bis 12, **dadurch gekennzeichnet, dass** die Herausfallsicherung ein auf einer Ablagefläche angebrachtes, beispielsweise muldenförmiges Bauteil aufweist.

14. LKW-Fahrerhaus nach einem der Ansprüche 7 bis 13, **dadurch gekennzeichnet, dass** die Ablagefläche eine Oberfläche mit einem hohen Haftungsvermögen aufweist.

15. LKW-Fahrerhaus nach einem der Ansprüche 1 bis 14, **dadurch gekennzeichnet, dass** die am in Fahrtrichtung betrachtet hinteren Bretteil (12) angerodneten Schenkel (16) mit einer Struktur einer Karosserie (21) oder eines LKW-Fahrerhauses (11) verbunden sind.

16. LKW-Fahrerhaus nach einem der Ansprüche 1 bis 15, **dadurch gekennzeichnet, dass** die Liege (10) nachrüstbar ist.

17. LKW-Fahrerhaus nach einem der Ansprüche 1 bis 16, **dadurch gekennzeichnet, dass** es ein mittellanges oder kurzes Fahrerhaus (11) ist.

## Claims

1. Truck driver's cab with a bunk (10,) which features a board arranged on the rear wall of the truck cab (11), which board is longitudinally divided into two board sections (12, 13) which can be slewed relative to each other and whose longitudinal direction is at right angles to the vehicle's longitudinal axis, **characterised in that** at each end (14, 15) of each board section (12, 13) a leg (16, 17) is located, whereby the legs (16, 17) on adjacent ends (14, 15) are linked together with a hinge element (18).

2. Truck cab as in Claim 1, **characterised in that** the hinge element (18) manifests a catch device.

3. Truck cab as in Claim 1 or 2, **characterised in that**, looking in the direction of motion, the front board section (13) can be slewed upwards into a vertical position.

4. Truck cab as in Claims 1 to 3, **characterised in that** the bipartite board manifests padding (19).

5. Truck cab as in Claim 4, **characterised in that** each board section (12, 13) manifests separate padding (19).

6. Truck cab as in Claims 1 to 5, **characterised in that**, looking in the direction of motion, the front board section (13) can be slewed in such a way that the padded faces of both board sections (12, 13) lie one on top of the other.

7. Truck cab as in Claim 6, **characterised in that** the upper board section (13) bears on its front edge (looking in direction of motion) a device for preventing items from falling out.

8. Truck cab as in Claim 6 or 7, **characterised in that** the upper board section (13) bears on its lateral edges a device to prevent items from falling out.

9. Truck cab as in Claim 7 or 8, **characterised in that** the device to prevent items falling out is a border strip (20) projecting upwards above the storage faces.

10. Truck cab as in one of the Claims 7 to 9, **characterised in that** the device to prevent items from falling out is a net.

11. Truck cab as in one of the Claims 7 to 10, **characterised in that** the device to prevent items from falling out manifests at least one magnet.

12. Truck cab as in one of the Claims 7 to 11, **characterised in that** the device to prevent items from falling out has at least one recess in the storage face.

13. Truck cab as in one of the Claims 7 to 12, **characterised in that** the device to prevent items from falling out manifests a, for example, bowl-shaped element fitted to one storage face.

14. Truck cab as in one of the Claims 7 to 13, **characterised in that** the storage face has a surface with a high adhesive force.

15. Truck cab as in one of the Claims 7 to 14, **characterised in that**, looking in the direction of motion, the legs (16) located on the rear board section (12) are connected with a structure of the bodywork (21) or of a truck cab (11).

16. Truck cab as in one of the Claims 1 to 15, **characterised in that** the bunk (10) can be retrofitted.

17. Truck cab as in one of the Claims 1 to 16, **characterised in that** it is a medium-length or short cab (11).

## Revendications

1. Cabine de camion avec une couchette (10) qui présente un panneau disposé sur une paroi arrière de la cabine de camion (11), ce panneau étant divisé dans son sens longitudinal en deux parties de panneau (12, 13) repliables l'une contre l'autre et le sens longitudinal du panneau étant disposé en travers par rapport à l'axe longitudinal du véhicule, **caractérisée en ce que**, sur les côtés avant (14, 15) de chaque partie de panneau (12, 13) est disposée à chaque fois une ferrure (16, 17), auquel cas les ferrures (16, 17) disposées sur les côtés avant (14, 15) voisins sont reliées les unes aux autres par un élément pivotant (18).

2. Cabine de camion selon la revendication 1, **caractérisée en ce que** l'élément pivotant (18) présente un dispositif de blocage.

3. Cabine de camion selon la revendication 1 ou 2, **caractérisée en ce que** la partie de panneau avant (13), vue dans le sens de la marche, est pivotable à la verticale vers l'avant.

4. Cabine de camion selon l'une des revendications 1 à 3, **caractérisée en ce que** le panneau divisé en deux présente un rembourrage (19).

5. Cabine de camion selon la revendication 4, **caractérisée en ce que** chaque partie de panneau (12, 13) présente un rembourrage (19) séparé.

6. Cabine de camion selon l'une des revendications 1 à 5, **caractérisée en ce que** la partie de panneau avant (13), vue dans le sens de la marche, est pivotable de manière à ce que les surfaces rembourrées des deux parties de panneau (12, 13) s'appuient l'une sur l'autre.

7. Cabine de camion selon la revendication 6, **caractérisée en ce que** la partie de panneau supérieure (13) présente un dispositif de protection antichute au niveau du bord avant, vu dans le sens de la marche.

8. Cabine de camion selon la revendication 6 ou 7, **caractérisée en ce que** la partie de panneau supérieure (13) présente un dispositif de protection antichute au niveau des bords latéraux.

9. Cabine de camion selon la revendication 7 ou 8, **caractérisée en ce que** le dispositif de protection antichute est une barre en saillie vers le haut au-dessus des surfaces de réception.

10. Cabine de camion selon l'une des revendications 7 à 9, **caractérisée en ce que** le dispositif de protection antichute est un filet.

11. Cabine de camion selon l'une des revendications 7 à 10, **caractérisée en ce que** le dispositif de protection antichute présente au moins un aimant.

12. Cabine de camion selon l'une des revendications 7 à 11, **caractérisée en ce que** le dispositif de protection antichute présente au moins un évidement réalisé dans la surface de réception.

13. Cabine de camion selon l'une des revendications 7 à 12, **caractérisée en ce que** le dispositif de protection antichute présente un composant placé sur cette surface de réception, par exemple, en forme de cuvette.

14. Cabine de camion selon l'une des revendications 7 à 13, **caractérisée en ce que** le dispositif de protection antichute présente une surface avec une capacité d'adhérence élevée.

15. Cabine de camion selon l'une des revendications 7 à 14, **caractérisée en ce que** les ferrures (16) disposées sur la partie de panneau arrière (12), vues dans le sens de la marche, sont reliées à une structure d'une carrosserie (21) ou d'une cabine de camion (11).

16. Cabine de camion selon l'une des revendications 7 à 15, **caractérisée en ce que** la couchette (10) peut être montée ultérieurement.

17. Cabine de camion selon l'une des revendications 7 à 16, **caractérisée en ce que** la cabine est une cabine mi-longue ou courte (11).
